Europäisches Patentamt

European Patent Office

Office européen des brevets

(19)

(11) Numéro de publication : **0 431 118 B1**

(12) **FASCICULE DE BREVET EUROPEEN**

(45) Date de publication du fascicule du brevet :
**19.01.94 Bulletin 94/03**

(51) Int. Cl.⁵ : **F23D 14/18,** F23D 14/66,
F23D 14/64

(21) Numéro de dépôt : **90909328.8**

(22) Date de dépôt : **25.06.90**

(86) Numéro de dépôt international :
**PCT/CH90/00152**

(87) Numéro de publication internationale :
**WO 91/00475 10.01.91 Gazette 91/02**

(54) PROCEDE POUR ALIMENTER UN BRULEUR A CATALYSE EN GAZ NATUREL ET DISPOSITIF POUR LA MISE EN OEUVRE DE CE PROCEDE.

(30) Priorité : **27.06.89 CH 2396/89**

(43) Date de publication de la demande :
**12.06.91 Bulletin 91/24**

(45) Mention de la délivrance du brevet :
**19.01.94 Bulletin 94/03**

(84) Etats contractants désignés :
**AT BE CH DE DK ES FR GB IT LI LU NL SE**

(56) Documents cités :
**DE-A- 2 720 866**
**FR-A- 1 495 494**
**FR-A- 2 496 838**
**FR-A- 2 607 024**
**Patent Abstracts of Japan, vol. 9, no. 184**
**(C-294)(1907), 30 juillet 1985, & JP-A-6054903**
**(MATSUSHITA DENKI SANGYO K.K.) 29 mars**
**1985**

(56) Documents cités :
**Patent Abstracts of Japan, vol. 11, no. 166**
**(M-593)(2613), 28 mai 1987, & JP-A-61295408**
**(MATSUSHITA ELECTRIC IND. CO., LTD.) 26**
**décembre 1986**
**Revue Generale de Thermique, vol. 28, no.**
**330-331, juin-juillet 1989, (Paris, FR), D. Jones**
**et al.: "Combustion catalytique et gaz natu-**
**rel", pages 401-406**

(73) Titulaire : **RADIAMON S.A.**
**55, rue de France**
**CH-2400 Le Locle (CH)**

(72) Inventeur : **CAPITAINE, Gérard**
**13, chemin de la Pierre-Grise**
**CH-1294 Genthod (CH)**
Inventeur : **JAVET, Claudio**
**décédé (CH)**

(74) Mandataire : **Dousse, Blasco et al**
**7, route de Drize**
**CH-1227 Carouge/Genève (CH)**

## Description

La présente invention se rapporte a un procédé pour alimenter un brûleur à catalyse en gaz naturel comportant un composé du soufre sous forme d'additif et à un dispositif pour la mise en oeuvre de ce procédé.

Certains gaz naturels étant pratiquement inodores, la loi exige de leur incorporer un additif afin de les rendre détectables par l'odorat. Ces additifs sont généralement des composés du soufre tel que le tetrahydrotiophène (THT). Dans les brûleurs classiques à flamme, la chaleur provoque la décomposition du composé et le soufre est oxydé. La température de la combustion étant beaucoup plus basse dans un brûleur à catalyse que dans un brûleur classique et se situant entre 350°C et 700°C, l'oxydation du soufre peut être incomplète dans certaines zones moins chaudes du catalyseur et l'on constate alors dans ces zones un empoisonnement du catalyseur par le soufre, rendant le catalyseur inopérant. Dès lors, la zone empoisonnée s'étend et le catalyseur se trouve rapidement hors d'usage. C'est la raison pour laquelle les brûleurs à catalyse, fonctionnant avec des réseaux de distribution du gaz naturel dans lequel des composés odoriférants du type THT ont été ajoutés, posent de graves problèmes d'empoisonnement par le soufre.

Or, il existe de nombreuses applications dans lesquelles le brûleur à catalyse présente des avantages par rapport à d'autres types de combustion, étant donné qu'il ne forme pas de gaz nocifs tels que CO et $NO_x$, ce qui permet de réduire la pollution atmosphérique, le chauffage constituant à cet égard un facteur important de cette pollution. L'absence de gaz nocifs dans les gaz de combustion produits par la combustion à catalyse permet d'utiliser ces gaz directement pour le chauffage de locaux. Il est évident que ces avantages vont dans le sens de la protection de l'environnement et impliquent une économie d'énergie importante.

On a déjà proposé dans le JP-A-61-295408 de réduire les effets nocifs du soufre sur le métal catalyseur et d'augmenter la durée de vie du catalyseur de combustion à l'aide d'un premier catalyseur qui porte un mélange d'un catalyseur d'oxydation et d'un catalyseur de désulfuration sur un support formé d'un assemblage poreux de fibres de céramique et d'un second catalyseur de combustion qui porte seulement le catalyseur d'oxydation. Cette solution nécessite deux catalyseurs ce qui renchérit sensiblement le prix de l'appareil.

Le JP-A-60-54903 se rapporte également à l'enlèvement d'un agent odoriférant provenant d'un composé du soufre comprenant un catalyseur de désulfuration et un catalyseur de reformage.

Le DE-A-2720866 se rapporte à un catalyseur pour éliminer les substances nocives des gaz d'échappement. Ceux-ci sont pré-chauffés au-dessous de la température de combustion par barbotage dans un bain d'huile au-dessus duquel se trouve un catalyseur associé à un tissu. Le catalyseur chauffe le tissu par rayonnement, de sorte que les gaz d'échappement sont encore chauffés de 10°C à 20°C en traversant le tissu et sont à la température de combustion lorsqu'ils arrivent sur le catalyseur. Grâce à cette mesure, on arrive de façon surprenante, à éviter l'empoisonnement du catalyseur par le composé soufré.

On constate que ce problème a déjà été abordé mais que les solution proposées soit font usage de deux catalyseurs augmentant très sensiblement le prix de l'appareil, soit ne sont pas adaptées au problème de la désulfuration d'un gaz de combustion.

Le but de la présente invention est d'apporter une solution qui permette de résoudre ce problème de façon simple, peu coûteuse et efficace.

A cet effet, cette invention a pour objet un procédé pour alimenter un brûleur à catalyse en gaz naturel comportant un composé du soufre selon la revendication 1. Elle a également pour objet un dispositif pour la mise en oeuvre de ce procédé selon la revendication 3.

Les avantages de la solution proposée sont importants dans la mesure où l'efficacité du procédé et du dispositif pour sa mise en oeuvre a été démontrée par des essais de longue durée qui n'ont permis de constater aucun empoisonnement des catalyseurs utilisés dans les brûleurs. Le dispositif nécessaire à la mise en oeuvre du procédé est simple et peu coûteux à fabriquer. Le fait qu'il ne comporte aucune pièce mobile, ne nécessite ni entretien ni réglage, n'entraîne donc aucun frais de fonctionnement particulier. L'utilisation de très faibles quantités d'air, dans la mesure où la quantité de soufre à oxyder ajoutée dans le gaz naturel du réseau est de l'ordre de 10-15 ppm, ne modifie pratiquement pas les caractéristiques de la combustion. Enfin, la dépense d'énergie nécessaire au chauffage du mélange de gaz et d'air étant faible, le chauffage est réalisé par le brûleur lui-même. En effet les mesures montrent que la température à l'intérieur des matériaux catalytiques reste quasi constante et supérieure à la température de décomposition thermo-chimique de la molécule contenant le soufre, quelle que soit la température à la surface extérieure des matériaux catalytiques.

Il n'en demeure pas moins que la réalisation de ce procédé pose de multiples problèmes et que le dispositif pour sa mise en oeuvre est loin d'être évident à réaliser. Il est en effet nécessaire d'entraîner des quantités d'air aussi faibles que possible avec le gaz naturel dont la densité est inférieure à celle de l'air et dont la pression d'alimentation et donc la vitesse sont très faibles. En effet, cette pression dans les réseaux de distribution de gaz naturel est en général de 2,3 kPa, de sorte qu'il est nécessaire de faire fonctionner l'injecteur et de mélanger les fluides gaz naturel et air à des nombres de Reynolds, basés sur le diamètre de la buse, très bas, inférieurs à 10'000. Le tout est rendu d'autant plus complexe que le même dispositif doit pouvoir fonctionner sans être modifié à des débits variant dans un rapport de 1 a 3. En effet, toute modification des sections de passage nécessiterait un système de régulation, augmenterait le coût de l'appareil dans une proportion inacceptable et diminuerait sa fiabilité.

Le dessin annexé illustre, schématiquement et à titre d'exemple, une forme d'exécution du dispositif pour la mise en oeuvre du procédé objet de la présente invention.

La figure 1 est une vue en coupe schématique de ce dispositif.

La figure 2 est un diagramme du gain de pression de l'élargissement brusque de l'injecteur en fonction du nombre de Reynolds.

La figure 3 est un diagramme des pressions dans le dispositif de la figure 1.

La figure 4 est un diagramme de la perte de charge totale dans le système d'électro-vanne.

Le dispositif pour la mise en oeuvre du procédé objet de la présente invention comporte une source de gaz sous pression G dont le débit est contrôlé, dans cet exemple, par une électrovanne EV comportant un piston P traversé par un conduit C1 pour le passage du gaz. Cette électro-vanne ne faisant pas partie de la présente invention, elle ne sera pas décrite ici. La sortie de cette électro-vanne communique avec une buse BG dont la sortie débouche dans un cône C ménageant avec l'extrémité de la buse BG une ouverture annulaire BA qui, reliée à l'atmosphère, sert de buse secondaire pour l'injection d'air dans le flux de gaz. Le cône C est suivi d'une partie cylindrique de section $S_1$ puis d'un élargissement brusque BC dit de Borda-Carnot de section $S_2$ qui débouche dans un échangeur de chaleur EC qui est en contact avec un substrat imprégné d'un matériau catalytique MC d'oxydation du gaz combustible. Le rapport entre la longueur de cette partie BC et le diamètre de sa section $S_2$ doit être compris entre 8 et 12.

Le procédé objet de la présente invention consiste à aspirer une faible quantité d'air grâce à la dépression créée par l'élargissement brusque BC disposé en aval de la buse. Par la même occasion et comme on l'expliquera par la suite, l'élargissement brusque provoque de fortes turbulences dans l'écoulement, même à des vitesses d'écoulement relativement faibles, assurant ainsi un mélange homogène entre l'air et le gaz combustible. Ce mélange est alors introduit dans l'échangeur de chaleur où il est chauffé à une température minimum de 530°C à laquelle les molécules de tétrahydrotiophène (THT) se décomposent et libèrent le soufre qui s'oxyde au contact de l'oxygène de l'air présent dans le mélange. De ce fait, lorsque le mélange combustible est amené au contact du brûleur à catalyse avec un nouvel apport d'air destiné à l'oxydation du combustible, le soufre se trouve sous forme de $SO_2$ qui n'empoisonne pas le catalyseur.

Comme on l'a souligné précédemment, la mise en oeuvre de ce procédé pose des problèmes assez délicats à résoudre. La densité du fluide d'entraînement, plus faible que celle du fluide entraîné, la viscosité cinématique des fluides gazeux beaucoup plus élevée que celle des liquides, ainsi que la faible vitesse du gaz due à la basse pression d'alimentation du gaz naturel, impliquent des nombres de Reynolds inférieurs a 10'000 constituant des conditions opératoires tout à fait inhabituelles.

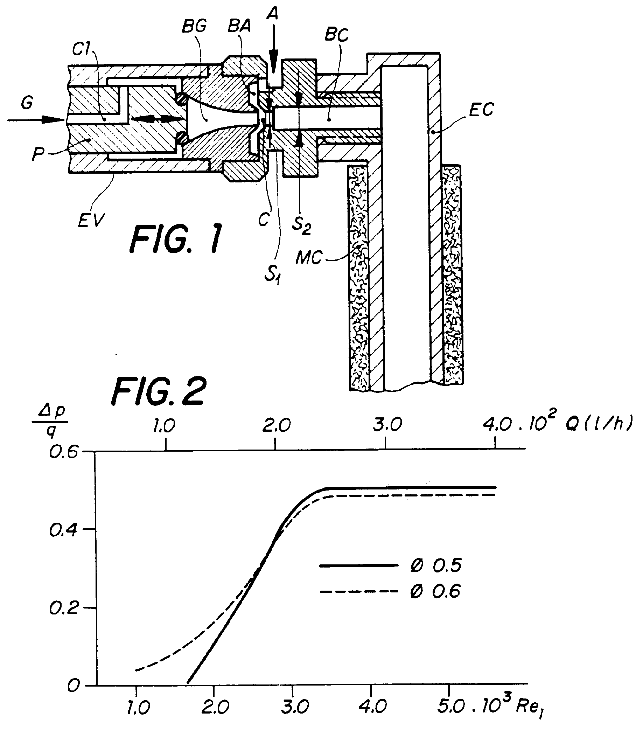

Ces raisons ont conduit les inventeurs à remplacer le diffuseur classique en cône par un élargissement brusque dit de Borda-Carnot. En effet, aux nombres de Reynolds considérés, le diffuseur en cône ne permet pas de garantir la stabilité de l'écoulement d'autant plus que le débit et donc la vitesse et le nombre de Reynolds sont appelés à être réduits jusqu'à 30 % du débit nominal suivant la puissance demandée au brûleur. Au contraire, si l'élargissement brusque a un moins bon rendement, son fonctionnement est mieux connu aux nombres de Reynolds bas et, comme le montre le diagramme de la figure 2, il permet d'obtenir, à partir d'un nombre de Reynolds de 3'000 environ et pour des rapports de section $S_1/S_2$ de l'élargissement brusque de 0,5 à 0,6, un gain de pression maximum $\Delta p/q$ d'environ 0,5, q étant la pression dynamique dans le col de la buse, et peut encore fonctionner à un nombre de Reynolds de 2'000 basé sur les conditions d'écoulement dans le col de la buse. Ces indications proviennent du Mememto des pertes de charges de Idelcik (Eyrolles).

Le diffuseur débouche dans l'échangeur EC qui est en contact avec le substrat imprégné de la substance catalytigue. Ici le substrat est un matériau formé de fibres réfractaires imprégnées de platine. L'échangeur peut être constitué par un simple tube de section et de longueur appropriées ou par deux tubes disposés coaxialement l'un à l'intérieur de l'autre, assurant ainsi un écoulement à contre-courant dans l'espace annulaire entre les tubes puis dans le tube central. La section de ce tube doit être choisie pour créer une perte de charge acceptable compte tenu de la pression d'alimentation du gaz naturel.

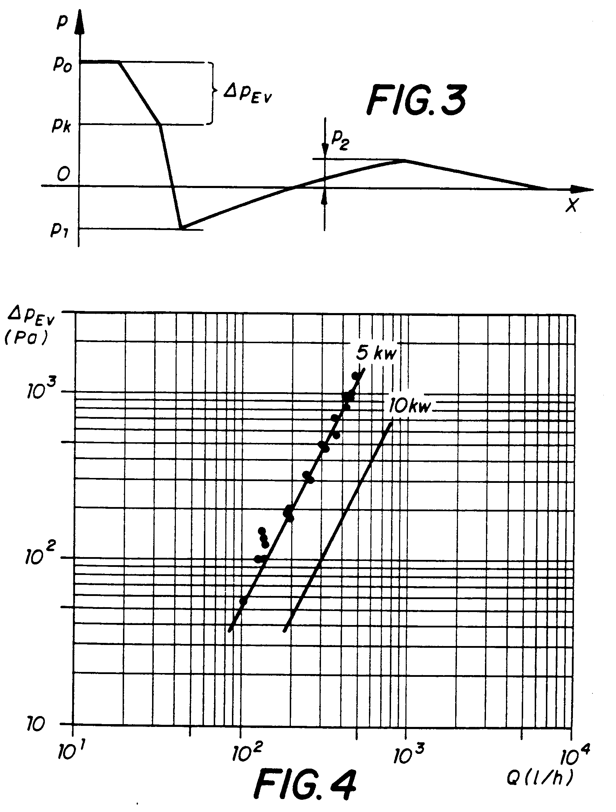

Le diagramme de la figure 3 illustre, schématiquement, la valeur des pressions aux différents endroits du dispositif par rapport à la pression atmosphérique qui correspond à l'axe des x. $p_o$ correspond à la pression à l'entrée de l'électro-vanne EV. $\Delta p_{EV}$ est la perte de charge à travers l'électro-vanne. $p_k$ correspond à la pression à l'entrée de l'injecteur et $p_1$ à celle régnant dans le col de l'injecteur et qui sert à aspirer l'air atmosphérique. $p_2$ est la pression à l'entrée de l'échangeur de chaleur, la sortie étant pratiquement à la pression atmosphérique.

Nous allons maintenant donner un exemple de dimensionnement du dispositif pour traiter un gaz naturel

3

alimenté à la pression de 2,3 kPa avec un débit nominal de 0,50 m³/h destiné à alimenter un appareil de chauffage à brûleur à catalyse de 5 kW. Dans cet exemple, le conduit C1 ménagé dans le piston P de l'électro-vanne EV a un diamètre de 3 mm, la buse principale BG a un diamètre de 1,5 mm, le petit diamètre du diffuseur est de 1,6 mm et celui de l'élargissement brusque de 2,2 mm. Les diamètres hydrauliques de l'échangeur à contre-courant sont de 3 à 5 mm environ et sa longueur est de 34 cm. Le tableau ci-dessous donne les valeurs des pressions $p_o$ m $p_1$ et $p_2$ à différents débits de gaz Q.

| Q | $p_O$ | $p_1$ | $p_1$ | $p_2$ |
|---|---|---|---|---|
| l/h | Pa | Pa | Pa | Pa |
| | | (mesuré) | (calculé) | |
| 432 | 1700 | - 830 | - 640 | 80 |
| 308 | 900 | - 350 | - 320 | 40 |
| 200 | 380 | - 130 | - 108 | ~ 0 |
| 136 | 250 | - 50 | - 20 | ~ 0 |

On constate que $p_1$ est au-dessous de la pression atmosphérique pour tous les débits considérés, aussi bien pour les valeurs calculées que pour celles mesurées. A ce sujet, il faut signaler une certaine imprécision due à l'appareillage de mesure disponible ainsi qu'à certaines fluctuations dans la pression du réseau d'alimentation.

Le catalyseur étant à une température de l'ordre de 700°C, la température du mélange de gaz à la sortie de l'échangeur de chaleur EC a été calculée de sorte qu'elle soit de l'ordre de 550°C. Des essais ont été réalisés avec un appareil de chauffage avec brûleur à catalyse alimenté en gaz naturel contenant de l'ordre de 15 ppm de THT et traité avec le dispositif décrit. Après 4'500 heures de fonctionnement, aucune trace d'empoisonnement du catalyseur n'a été décelée. Par contre, dès que l'entrée d'air de la buse secondaire BA est bouchée, on constate un début d'empoisonnement du catalyseur par le soufre. Toutefois, on a pu constater que cet empoisonnement disparaît lorsque l'admission d'air est rétablie. Cette expérience démontre le rôle indispensable de l'air, un simple préchauffage du combustible n'étant pas suffisant.

Il est certain que la proportion d'air aspirée dans le cas du dispositif décrit est très largement excédentaire par rapport à la stoéchiométrie air-soufre, compte tenu de la quantité de THT présent. Ce fait n'a engendré aucune diminution mesurable du rendement du brûleur, ce qui confirme la valeur de cette solution.

Il est évidemment possible d'adapter le dispositif décrit a toute sorte d'appareils à combustion catalytique de différentes puissances. C'est ainsi que, pour un appareil de chauffage de 10 kW nécessitant un débit nominal de l'ordre de 1,0 m³/h également alimenté à une pression de 2,3 kPa, le diagramme à échelle logarithmique de la figure 4 relatif aux pertes de charges dans le système d'électro-vanne contrôlant le débit d'entrée, permet de déduire que, pour travailler dans les mêmes conditions, les diamètres de l'électro-vanne et de l'échangeur de chaleur du dispositif d'alimentation doivent être multipliés par rapport à l'appareil de 5 kW par un facteur d'environ 1,5 ce qui donne une électro-vanne avec un conduit C1 de 4,5 mm a travers le piston P et un échangeur de chaleur de 9 mm. Etant donné le diamètre relativement important de cet échangeur de chaleur, il est toujours possible d'en accroître l'efficacité en adoptant la solution de l'écoulement à contre-courant dans deux tubes coaxiaux comme on l'a mentionné précédemment.

Dans l'exemple décrit ici, le contrôle de l'alimentation de gaz a été réalisé à l'aide d'une électro-vanne choisie pour être associée à un circuit de régulation électronique. Il est cependant évident que tout autre système de régulation approprié peut remplacer l'electro-vanne décrite qui, comme on l'a déjà précisé, ne fait pas partie de l'invention.

**Revendications**

1. Procédé pour alimenter un brûleur à catalyse en gaz naturel comportant un composé du soufre sous forme d'additif, caractérisé par le fait que l'on forme préalablement un mélange de gaz naturel et d'air avec une proportion d'air au moins suffisante pour permettre d'oxyder le soufre présent dans ledit composé, on chauffe ce mélange jusqu'à la température de décomposition du composé pour permettre l'oxydation du soufre libéré par l'oxygène présent dans ce mélange et on alimente le brûleur à catalyse avec ce mélange de gaz.

2. Procédé selon la revendication 1, caractérisé par le fait que l'on chauffe le mélange jusqu'à une température d'au moins 530°C.

3. Dispositif pour la mise en oeuvre du procédé selon la revendication 1, caractérisé par le fait qu'il comporte successivement une buse principale reliée à une source de gaz naturel sous pression, une buse secondaire débouchant dans la buse principale et reliée à l'atmosphère, un diffuseur formé par un élargissement brusque de Borda-Carnot susceptible de fonctionner à partir d'un nombre de Reynolds de l'ordre de 2000, un échangeur de chaleur, en contact avec le matériau catalytique du brûleur, dont la sortie est reliée à l'alimentation de ce brûleur.

4. Dispositif selon la revendication 3, caractérisé par le fait que l'échangeur de chaleur est constitué par deux tubes coaxiaux ménageant entre eux un conduit de section annulaire dont le tube de plus grand diamètre est fermé à une extrémité, le tube de plus petit diamètre s'arrêtant à distance de cette extrémité fermée pour assurer un écoulement à contre-courant.

## Patentansprüche

1. Verfahren zur Versorgung eines Brenners mit Katalysator für Erdgas, das eine Schwefelverbindung in Form eines Zusatzstoffes enthält, dadurch gekennzeichnet, daß zuerst eine Mischung aus Erdgas und Luft gebildet wird, wobei der Anteil der Luft zumindest ausreicht um die Oxidation des in der Verbindung vorhandenen Schwefels zu erlauben, daß dann diese Mischung bis zur Temperatur der Zersetzung der Verbindung erhitzt wird, um die Oxidation des freigesetzten Schwefels durch den in der Mischung vorhandenen Sauerstoff zu erlauben und daß dann der Brenner mit Katalysator mit dieser Gasmischung versorgt wird.

2. Verfahren gemäß Anspruch 1, dadurch gekennzeichnet, daß man die Mischung bis auf eine Temperatur von zumindest 530°C.

3. Vorrichtung zur Durchführung des Verfahrens gemäß Anspruch 1, dadurch gekennzeichnet, daß sie nacheinander eine Hauptdüse, die mit einer Erdgasquelle unter Druck verbunden ist, eine zweite Düse, die in die Hauptdüse einmündet und mit der Außenluft verbunden ist, einen Diffusor, der durch eine plötzliche Erweiterung nach Borda-Carnot gebildet wird und geeignet ist, ausgehend von einer Reynolds-Zahl in der Größenordnung von 2000 zu funktionieren, einen Wärmetauscher, der in Kontakt mit dem Katalysatormaterial des Brenners ist und dessen Ausgang mit der Versorgung des Brenners verbunden ist, enthält.

4. Vorrichtung gemäß Anspruch 3, dadurch gekennzeichnet, daß der Wärmetauscher durch zwei koaxiale Rohre gebildet wird, zwischen denen eine Leitung mit ringförmigem Querschnitt ausgespart ist, wobei das Rohr mit dem größeren Durchmesser an einem Ende geschlossen ist und das Rohr mit dem kleineren Durchmesser im Abstand zu diesem geschlossenen Ende endet, um eine gegenläufige Strömung zu sichern.

## Claims

1. A process for supplying a catalytic burner with natural gas including a sulphur compound as an additive, **characterised in that** firstly a mixture of natural gas and air is preliminarily formed, with a proportion of air at least sufficient to allow oxidation of the sulphur in the said compound, the said mixture is heated to the decomposition temperature of the compound to allow oxidation of the liberated sulphur by means of the oxygen in the said mixture, and the catalytic burner is supplied with the said mixture of gas.

2. A process in accordance with claim 1, **characterised in that** the mixture is heated to a temperature of at least 530°C.

3. A device for implementing the process in accordance with claim 1, **characterised in that** it comprises, in succession, a main nozzle connected to a source of natural gas under pressure, a secondary nozzle which opens into the main nozzle and is connected to the atmosphere, a diffuser, formed from a sharply widened portion of the Borda-Carnot type and capable of operating on the basis of a Reynolds number in the order of 2000, and a heat exchanger, in contact with the catalyst in the burner, whose outlet is connected to the supply to the said burner.

4. A device in accordance with claim 3, **characterised in that** the heat exchanger comprises two coaxial tubes, forming a pipe of annular cross-section therebetween, the tube of larger diameter being closed at one end and the tube of smaller diameter ending at a distance from the said closed end, to ensure flow in the reversed direction.

# FIG. 1

# FIG. 2

FIG.3

FIG.4